## Europäisches Patentamt

## European Patent Office

## Office européen des brevets

(19)

(11) Veröffentlichungsnummer : **0 407 896 B1**

(12)

# EUROPÄISCHE PATENTSCHRIFT

(45) Veröffentlichungstag der Patentschrift :
**16.06.93 Patentblatt 93/24**

(51) Int. Cl.$^5$ : **A01B 39/08,** A01B 33/06

(21) Anmeldenummer : **90112898.3**

(22) Anmeldetag : **06.07.90**

(54) **Bodenbearbeitungsmaschine für Reihenkulturen.**

(30) Priorität : **08.07.89 DE 3922565**

(43) Veröffentlichungstag der Anmeldung :
**16.01.91 Patentblatt 91/03**

(45) Bekanntmachung des Hinweises auf die
Patenterteilung :
**16.06.93 Patentblatt 93/24**

(84) Benannte Vertragsstaaten :
**AT BE CH DE DK ES FR GB GR IT LI LU NL SE**

(56) Entgegenhaltungen :
**DE-A- 1 757 452**
**DE-A- 1 813 079**
**DE-B- 1 060 641**

(56) Entgegenhaltungen :
**DE-B- 1 195 535**
**DE-C- 947 654**
**GB-A- 450 535**
**GB-A- 872 372**
**US-A- 3 082 829**

(73) Patentinhaber : **PAUL, Karl-Heinz**
**Zur Wilde 8**
**W-3590 Bad Wildungen-Wega (DE)**

(72) Erfinder : **PAUL, Karl-Heinz**
**Zur Wilde 8**
**W-3590 Bad Wildungen-Wega (DE)**

(74) Vertreter : **Rehberg, Elmar, Dipl.-Ing.**
**Postfach 3162 Am Kirschberge 22**
**W-3400 Göttingen (DE)**

EP 0 407 896 B1

## Beschreibung

Die Erfindung bezieht sich auf eine Bodenbearbeitungsmaschine für Reihenkulturen mit den im Anspruch 1 angegebenen Merkmalen. Die Bodenbearbeitungsmaschine dient dem Zweck, den Boden zwischen den Reihenkulturen, also zwischen den Pflanzen, zu bearbeiten, indem dort wachsendes Unkraut, nicht aber die in den Reihen wachsenden Kulturpflanzen, beeinträchtigt werden. Es können auch Gemüsekulturen wie Bohnen, Erbsen usw. bearbeitet werden, und zwar nicht nur im Auflaufstadium der Pflanzen, sondern auch dann, wenn die Pflanzen bereits eine gewisse Wuchshöhe aufweisen.

Die DE-OS 18 13 079 zeigt eine Bodenbearbeitungsmaschine für Reihenkulturen mit den im Oberbegriff des Anspruchs 1 angegebenen Merkmalen. Dabei sind an vertikal angeordneten Wellen Hackwerkzeuge vorgesehen, wobei die Wellen und damit die rotierend angetriebenen Hackwerkzeuge von Parallelogrammlenkern geführt werden, die andererseits an einem Maschinenrahmen aufgehängt sind. Bei diesen Hackwerkzeugen handelt es sich um Scheiben, an denen nach unten abstehende Messerklingen austauschbar befestigt werden können. Die so gebildeten Hackwerkzeuge dringen mit den Messerklingen in den Boden ein, wobei das gesamte Gewicht jedes Hackwerkzeugs einschließlich der vertikalen Welle einwirkt. Eine Begrenzung des Eindringens in den Boden wird allenfalls über die Scheiben erreicht. Damit sind die Hackwerkzeuge nicht nachgiebig und auch die Eindringtiefe in den Boden kann nicht variiert werden. Darüberhinaus ist es nicht möglich, mit derart ausgebildeten Hackwerkzeugen Reihenkulturen, wie beispielsweise Mais, nahe an die Wurzel heran feinfühlig zu bearbeiten. Durch die Scheiben besteht die Gefahr, daß dabei die Pflanzen zumindest in ihrem oberirdischen Stengel-Bereich umgeknickt oder beschädigt werden. Auch eine Beschädigung im Wurzelbereich ist durch die feststehenden Messerklingen gegeben. Insoweit verbleibt bei Verwendung derartiger Hackwerkzeuge notwendigerweise entlang der Reihe ein relativ breiter, nicht zu bearbeitender Streifen im Anschluß an die Pflanzen.

Eine weitere Bodenbearbeitungsmaschine ist aus der DE-PS 21 66 742 bekannt. Dabei ist ein gemeinsamer Antrieb mit einem zu den einzelnen vertikalen Wellen führenden Verteilergetriebe innerhalb des Maschinenrahmens sich über die Arbeitsbreite erstreckend vorgesehen. Der Abstand zwischen den einzelnen Wellen ist nicht veränderbar. Zur Anpassung an verschiedene Reihenabstände und/oder Reihenbreiten sind ein Teil der Werkzeugträger auszuwählen und nur diese mit Hackwerkzeugen zu bestücken. Der lösbar mit dem Maschinenrahmen verbundene Anbaubock ist seitlich umsetzbar, um auf diese Art und Weise eine Anpassung zu erreichen. Als Hackwerkzeuge sind einerseits mehr oder weniger vertikal angeordnete Zinken vorgesehen, die sich auf etwa zylindermantelförmigen Bahnen bewegen, wobei die Einstellung derart erfolgen muß, daß die Zinken die Pflanzen in den Reihen nicht beschädigen. Da die Pflanzen sich mit größer werdendem Wuchs nach oben verbreitern, verbleibt von diesen Pflanzen rechts und links ein entsprechend großer Bodenstreifen, der mit den Zinken nicht erreichbar ist, so daß das dort wachsende Unkraut auch nicht erfaßt werden kann. Weiterhin ist nachteilig, daß die Hackwerkzeuge zwischen den einzelnen Reihen nicht individuell bezüglich der Eindringtiefe in den Boden arbeiten können, sondern bei welligem Boden die Gefahr besteht, daß einige der Zinken übermäßig tief in den Boden eindringen und dort unter Umständen die Wurzeln der Kulturpflanzen beschädigen, während an anderen Stellen von den Zinken nicht einmal die Oberfläche des Bodens erreicht wird.

Der Erfindung liegt die Aufgabe zugrunde, eine Bodenbearbeitungsmaschine der eingangs beschriebenen Art derart weiterzubilden bzw. bereitzustellen, mit der individuell und in besserer Anpassung Reihenkulturen bearbeitet werden können. Dabei kommt es insbesondere darauf an, unbearbeitete Streifen zu vermeiden bzw. recht nahe an die Pflanzenreihen heranzukommen, damit nach Möglichkeit auch zwischen den Pflanzen stehende Unkräuter entfernt, herausgezogen oder sonstwie beeinträchtigt werden.

Erfindungsgemäß wird dies durch die Merkmale des Anspruchs 1 erreicht. Jedes um eine vertikale Welle rotierend angetriebene Hackwerkzeug ist nicht direkt am Maschinenrahmen gelagert, sondern auf einem eigenen, separaten Parallelogrammlenker angeordnet und geführt, so daß eine individuelle Höhenbeweglichkeit jedes Hackmessers unabhängig von den anderen Hackmessern an der Bodenbearbeitungsmaschine gegeben ist. Die Hackwerkzeuge, die auswechselbar an den Werkzeugträgern sitzen, weisen eine besondere Form auf, die als nach unten offene Topfform bezeichnet werden könnte. Die Hackwerkzeuge können damit beispielsweise auf einem Kegelmantel umlaufend angeordnet sein oder einen nach unten abgeknickten Kurvenzug bilden. Auch eine gebogene oder gewölbte Formgebung, immer nach unten offen, ist möglich. Diese besondere Formgebung fußt auf der Erkenntnis, daß eine Kulturpflanze in aller Regel an der Stelle, an der sie aus dem Boden hervortritt, eine geringere Breite bzw. Erstreckung quer zur Arbeitsrichtung aufweist als an Stellen, die sich nach oben anschließen. An solchen oberen, höher als der Boden befindlichen Stellen lädt die Pflanze durch die entsprechende Blattbildung o. dgl. weiter aus, so daß die Topfform des Hackwerkzeugs nicht zylindrisch sein darf, weil hierdurch diese ausladenden Pflanzenbestandteile beschädigt werden könnten, wenn man andererseits bemüht ist, im Wurzelbereich bis an die Pflanze heran möglichst dicht zu arbeiten. Dabei kommt es nicht so sehr darauf an, besonders tief in den Boden einzudringen. Es genügt durchaus, entweder nur eine gewisse Eindringtiefe zu verwirklichen oder aber auch mehr oder weniger schleifend oder rasierend über den Boden zu streichen, um dort wachsende Unkräuter abzuschlagen oder abzubürsten, so daß deren weiteres Wachstum erheblich beeinträchtigt ist. Um die Eindringtiefe in den Boden bzw. die Arbeitshöhe der Hackwerkzeuge relativ zum Boden individuell einzuhalten, ist in Zuordnung zu der Aufhängung mit dem Parallelogrammlenker in dem durch die Topfform gebildeten Innenraum, der nach unten offen ist, jeweils ein Abstützkörper vorgesehen, der sich auf dem Boden abstützt und damit die Höhenlage der Hackwerkzeuge relativ zum Boden festlegt. Dies geschieht an jedem einzelnen Hackwerkzeug individuell, so daß der Boden auch bei welliger Ausbildung zwischen den einzelnen Reihenkulturen trotzdem in übereinstimmender Weise bearbeitet wird. Die Bodenbearbeitungsmaschine kann nicht nur zum Abrasieren von Unkraut eingesetzt werden, wozu insbesondere mit federnd nachgiebigen Borsten besetzte Hackwerkzeuge eingesetzt werden können. Es ist vielmehr auch möglich, beispielsweise bei der Bearbeitung von Gemüsekulturen eine gewisse Häufelungswirkung zusätzlich zu erreichen. Je nach der Art der einzelnen eingesetzten Hackwerkzeuge kann auch eine Bodenlockerung zwischen den Reihen bis zu einer gewissen angestrebten Tiefe durchaus sinnvoll und erwünscht sein. Bei einer solchen Lockerungsarbeit wird gleichzeitig das Unkraut auch im Wurzelbereich erfaßt, also gleichsam ein Jätvorgang durchgeführt, wobei flachwurzelndes Unkraut insoweit mehr oder weniger vollständig ausgerissen und abgeschleudert wird, so daß es dann auf der Oberfläche des Bodens aufliegend vertrocknet. Die neue Vorrichtung läßt sich aber nicht nur zur Bodenbearbeitung bei Reihenkulturen einsetzen. Man kann mit ihr auch Kehrarbeiten z. B. auf Höfen und Plätzen sowie auf landwirtschaftlich genutzten Wegen durchführen. Auch eine gewisse Einebnungs- und Glättungswirkung kann beispielsweise durch die Bearbeitung von Wiesen erzielt werden.

Der Abstützkörper ist gegenüber dem Hackwerkzeug grundsätzlich höhenverstellbar angeordnet. Dies dient nicht nur der Einstellung der Eindringtiefe der Hackwerkzeuge in den Boden oder der Festlegung der Bearbeitungshöhe gegenüber dem Boden. Gleichzeitig wird durch die Höhenverstellbarkeit auch das gewünschte Arbeitsergebnis mehr oder weniger vorgegeben. Es versteht sich, daß die grundsätzliche Anordnung der Abstützkörper in Verbindung mit den Parallelogrammlenkern zu sehen ist. Die Höhenverstellbarkeit kann auch genutzt werden, um eine Anpassung an unterschiedliche Bodenbeschaffenheiten zu ermöglichen.

Versuche haben weiterhin ergeben, daß man sogar im Bereich der Reihen überlappend mit den Bürstenkörper über die Kulturpflanzen gleichsam hinwegfahren kann. Dies ist dadurch möglich, daß die Bürstenkörper mit Borsten aus federnd nachgiebigem Material eingesetzt werden. Die Kulturpflanzen sind in der Regel erheblich stärker verwurzelt und ausgebildet als die Unkräuter, so daß auf diese Art und Weise bei einem Überfahren und Überarbeiten zwar die Unkräuter beeinträchtigt werden, die Kulturpflanzen diese Bearbeitung aber ohne Nachteil überstehen. Allenfalls werden von den Kulturpflanzen ohnehin abgestorbene Pflanzenteile mit entfernt, was aber keineswegs nachteilig ist.

In Verbindung mit den vorstehend beschriebenen Merkmalen ist es besonders wichtig, daß am Parallelogrammlenker ein oder mehrere Federn und eine Einstelleinrichtung zum feinfühligen Einstellen einer Be- oder Entlastung des rotierend angetriebenen Hackwerkzeugs vorgesehen sind. Damit kann der Auflagedruck und die Arbeitstiefe des Bürstenkörpers und/oder zusätzlich angeordneter Zinken feinfühlig eingestellt werden, wobei auf die Bodenbeschaffenheit, die Bodenfeuchte, das Wachstumsstadium der Kulturpflanzen und Inkräuter sowie an weitere Parameter eine individuelle Anpassung erfolgen kann. Federn im Sinn einer Entlastung des Gewichts der Hackwerkzeuge werden dabei insbesondere dann eingesetzt, wenn flächendeckend auch über die Kulturpflanzen hinweggefahren wird oder wenn eine geringe Arbeitstiefe gewünscht wird. Man kann dabei auch zwischen den Reihen der Kulturpflanzen arbeiten und die Arbeitsbreite so einstellen, daß die rotierenden Bürstenkörper gerade noch mit dem Kulturpflanzen in Kontakt kommen. Wenn dagegen die Bearbeitungsmaschine z. B. zum Säubern von Hofflächen, Wegen u. dgl. eingesetzt wird, können die Federn zweckmäßig als Belastungsfedern eingesetzt werden. Dabei ist es möglich, ein und dieselben Federn zu verwenden und nur jeweils in unterschiedliche Aufnahmepunkte einzuhängen und anzustellen. Die Einstelleinrichtung weist in aller Regel eine Gewindeeinrichtung auf, um die Federn feinfühlig vorspannen und auf das Gewicht des Hackwerkzeugs einschließlich des Parallelogrammlenkers einzustellen. Die Feder oder die Federn können einerseits an den Lenkstangen des Parallelogrammlenkers und andererseits am Maschinenrahmen angreifend angeordnet sein, wobei es durchaus sinnvoll ist, den einen Anlenkpunkt der Federn im Bereich der Gelenke der Parallelogrammlenker am Maschinenrahmen oder jedenfalls in der Nähe dieses Punkts einzuhängen.

In der Regel ist der Parallelogrammlenker gegenüber dem Maschinenrahmen nur um quer zur Fahrtrichtung liegende Achsen schwenkbar. Für manche Anwendungsfälle kann es jedoch ausgesprochen sinnvoll sein, wenn der Parallelogrammlenker um eine vertikale Achse zusätzlich schwenkbar am Maschinenrahmen angeordnet ist. Eine solche Schwenkbarkeit ist sinnvoll bei der Bearbeitung von Kulturen von Beerensträuchern, beispielsweise Johannisbeeren, oder aber auch im Weinbau. Die Verschwenkrichtung um die horizontale Achse kann durch eine Feder vorgespannt sein, wobei die Vorspannkraft in Richtung auf die zu bearbeitenden Kulturpflanzen gerichtet ist. Damit ist es möglich, nicht nur unter Berührung dicht an die Kulturpflanzen heranzuarbeiten, sondern auch den Abstand zwischen zwei Sträuchern oder Weinstöcken in der Reihe zu bearbeiten und die dort wachsenden Unkräuter zu entfernen.

In einer bevorzugten Ausführungsform kann der Abstützkörper als Halbkugel ausgebildet sein, der an dem Werkzeugträger im Zentrum des Hackwerkzeugs lösbar befestigt ist. Diese Halbkugel sitzt damit gleichsam am unteren Ende der den Drehantrieb übertragenden Welle und wird selbst ebenfalls rotierend angetrieben, wodurch das Gleiten auf dem Boden erleichtert wird. Ein solcher Abstützkörper in Halbkugelform übt selbst nur eine geringe Verdichtungswirkung auf den Boden aus, gestattet es jedoch sehr zuverlässig, die betreffende Höhenlage einzuhalten. Er ist auch in der Lage, das nicht unbeträchtliche Gewicht des Parallelogrammlenkers teilweise sowie der vertikalen Wellen einschließlich der Hackwerkzeuge und der Lager sowie möglicher Teile des Verteilergetriebes aufzunehmen. Der Antrieb der Wellen und der Hackwerkzeuge kann in ganz verschiedener Weise erfolgen. Beispielsweise ist es möglich, den Zapfwellenantrieb des Schleppers zu nutzen und über verschiedene Winkel- und Eckgetriebe eine Aufteilung des Antriebs auf die verschiedenen Wellen zu bewirken. Es ist aber auch möglich, hydraulische Motoren einzusetzen, wobei entweder jeder vertikalen Welle ein eigener Ölmotor zugeordnet ist oder beispielsweise auch zwei in einem Reihenabstand arbeitende Hackwerkzeuge über einen gemeinsamen Ölmotor angetrieben werden können.

Das Hackwerkzeug jedes Parallelogrammlenkers besteht aus einem oder mehreren an dem Werkzeugträger zu befestigenden Bürstenkörpern. Diese Bürstenkörper können zweckmäßig Kegelmantelform aufweisen oder auch einen im Vertikalschnitt geknickten Kurvenzug bilden. Es ist auch möglich, Stahldrähte oder Zinken einzusetzen oder innerhalb eines Hackwerkzeugs mit zu verwenden. Auch schneidenartige oder löffelartige Hackwerkzeuge sind möglich oder können als Elemente Bestandteil eines Hackwerkzeugs sein. Es ist auch möglich, daß der Bürstenkörper eines Hackwerkzeugs mit Borsten unterschiedlicher Länge und/oder aus unterschiedlichen Materialien besetzt ist. Beispielsweise haben sich Borsten aus Kunststoff in Verbindung mit Borsten aus Metalldraht gut bewährt. Die steiferen Metalldrahtborsten dringen bis zur gewünschten Tiefe in den Boden ein und erbringen dort auch ein Ausjäten von Unkraut im Wurzelbereich, während die Kunststoffborsten aufgrund ihrer größeren Nachgiebigkeit mehr auf der Oberfläche arbeiten, das gelockerte bzw. ausgejätete Unkraut ergreifen und in einem Wurfvorgang einerseits von anhaftender Erde befreien und andererseits so auf die Oberfläche des Bodens werfen, daß ein Wiederanwachsen des Unkrauts bei zwischenzeitlicher Trocknung möglichst vermieden wird.

Jeder Parallelogrammlenker weist mindestens zwei parallele Lenkstangen und zwei Kopplungsglieder auf, wobei das eine Koppelglied am Maschinenrahmen gelagert ist und das andere Koppelglied ein Lager für die vertikale Welle eines Werkzeugträgers trägt. Die Ausbildung von Parallelogrammlenkern ist an sich im Landmaschinenbau bekannt. Wichtig ist vorliegend, daß eine ausreichend stabile Einheit gebildet wird, die letztlich in der Lage ist, das Hackwerkzeug zu tragen, Antriebselemente zu lagern und aufzunehmen, über die der Drehantrieb bewirkt wird. Die beiden parallelen Lenkstangen erstrecken sich somit in Arbeitsrichtung, sind gleichlang zwischen ihren Lagerstellen ausgebildet und sind über die Koppelglieder, deren Lagerstellen ebenfalls gleichen Abstand voneinander aufweisen, verbunden. Es können auch mehr als zwei parallele Lenkstangen vorgesehen sein, um den Parallelogrammlenker insgesamt auch räumlich auszubilden und stabiler zu gestalten.

Zur Einstellung auf verschiedene Reihenabstände und/oder Reihenbreiten kann entweder das eine Koppelglied am Maschinenrahmen querverschieblich befestigt sein und/oder im Bereich des anderen Koppelglieds kann das Lager für die vertikale Welle gegenüber den Lenkstangen des Parallelogrammlenkers querverschieblich sein. Damit wird es möglich, jedes Hackwerkzeug individuell an dem dafür vorgesehenen Ort - relativ zur Arbeitsbreite - anzuordnen und eingreifen zu lassen, so daß sowohl unterschiedlich breiten Pflanzen in der Reihe durch einen nicht bearbeiteten Bodenstreifen Rechnung getragen werden kann, als auch eine Einstellung hinsichtlich unterschiedlicher Reihenabstände bei den einzelnen Kulturen möglich ist. Die Breite der Bearbeitungsspur zwischen den Reihen wird natürlich auch von den Abmessungen des Hackwerkzeugs mitbestimmt. Die Hackwerkzeuge sind auswechselbar an den Werkzeugträgern befestigt. Unterschiedliche Abnutzungsgrade der Hackwerkzeuge, z. B. wenn diese aus rotierenden Bürstenkörpern bestehen, kann auch durch die Höhenverstellbarkeit entgegengetreten werden.

Für jeden Parallelogrammlenker können je zwei Lenkstangenpaare mit je zwei übereinander angeordneten Lenkstangen vorgesehen sein, die durch die gemeinsamen Koppelglieder miteinander verbunden sind. Damit entsteht ein räumlich steifes, jedoch im Sinn des Parallelogrammlenkers nachgiebiges Gebilde, welches in Arbeitsrichtung geführt ist und somit sehr wohl in der Lage ist, Kräfte ohne seitliche Verbiegung aufzunehmen, wie sie beispielsweise als Reaktionskräfte durch den rotierenden Antrieb der Hackmesser entstehen. Trotzdem sind auch diese Parallelogrammlenker seitlich verschiebbar, so daß die Anpassung an den Reihenabstand und die Reihenbreite möglich ist. Andererseits können längenveränderliche Antriebsteile von einer derartigen Ausbildung des Parallelogrammlenkers besonders günstig aufgenommen werden.

Die Hackwerkzeuge können in zwei oder auch mehr Zeilen mit gegenseitigem Abstand in Reihenrichtung angeordnet sein, wobei das Verteilergetriebe für den Antrieb der Wellen eine zeilenweise Verbindung mit Hilfe katanischer Gelenke und teleskopisch geführter Übertragungswellen vorsieht. Die Längenbeweglichkeit wird durch die teleskopische Führung der Wellenteile untereinander erreicht. Dies ist nicht nur erforderlich, wenn auf einen anderen Reihenabstand oder eine andere Reihenbreite umgestellt wird, sondern auch während der normalen Arbeit auf dem Boden, weil sich jedes einzelne Hackwerkzeug individuell in der Höhe gegenüber dem anderen Hackwerkzeug verstellen kann. Dabei ändert sich auch laufend der Abstand zwischen den beiden Hackwerkzeugen, der über die Antriebselemente überbrückt wird, so daß diese Längenveränderlichkeit bei Beibehaltung der Übertragung des Antriebs erforderlich ist.

Zur Bearbeitung des Abstands zwischen zwei benachbarten Reihen von Pflanzen können auch zwei oder mehr rotierend angetriebene Hackwerkzeuge vorgesehen sein, die in Arbeitsrichtung sowie quer dazu versetzt zueinander angeordnet sind und deren Arbeitsspuren einander überlappen. Damit bearbeitet gleichsam das eine Hackwerkzeug den an die eine Reihe angrenzenden Bodenbereich, während das andere Hackwerkzeug spiegelbildlich den Bodenbereich an der anderen Pflanzenreihe bearbeitet. Im Mittelbereich des Abstands überlappen sich dann die Arbeitsspuren der beiden Hackwerkzeuge.

Ein bevorzugtes Ausführungsbeispiel der Bodenbearbeitungsmaschine nach der Erfindung ist in den Zeichnungen dargestellt und wird im Folgenden beschrieben. Es zeigen:

Figur 1    eine Seitenansicht der Bodenbearbeitungsmaschine,

Figur 2    eine Draufsicht auf eine Bodenbearbeitungsmaschine,

Figur 3    eine Seitenansicht auf eine weitere Ausführungsform der Bodenbearbeitungsmaschine mit Be- oder Entlastungsfedern und

Figur 4    eine vergrößerte Detaildarstellung des Werkzeugträgers.

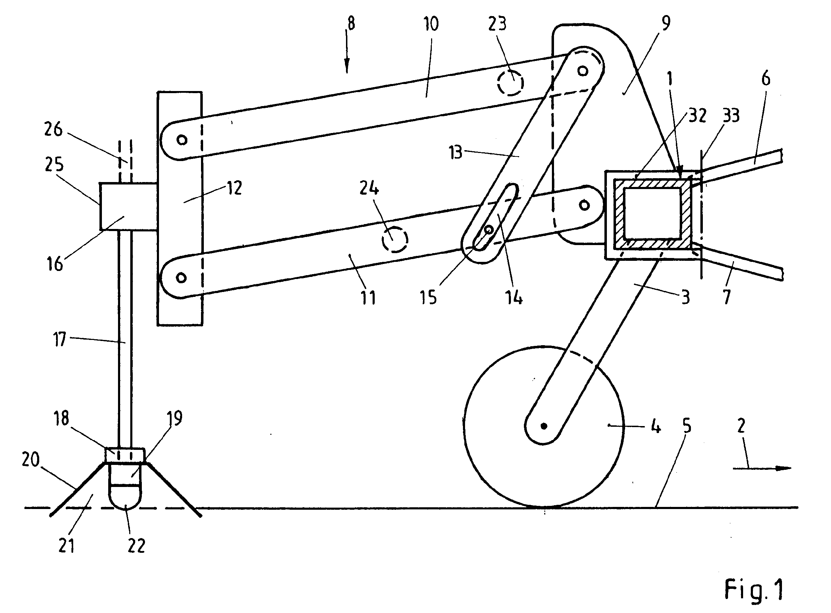

In Figur 1 ist eine Bodenbearbeitungsmaschine dargestellt, die einen Maschinenrahmen 1 aufweist, deren wesentlicher Bestandteil ein Vierkantrohr ist, welches sich quer zur Arbeitsrichtung gemäß Pfeil 2 über die entsprechende Breite erstreckt. Der Maschinenrahmen 1 kann an zwei Stellen seiner Arbeitsbreite je einen Ausleger 3 aufweisen, an dessen unterem Ende ein Tragrad 4 gelagert ist, welches auf dem Boden 5 abrollt. Am Maschinenrahmen 1 ist ein Träger 6 zur Verbindung mit dem Oberlenker und zwei Träger 7 zur Verbindung mit den Unterlenkern einer Dreipunkt-Hebevorrichtung eines Schleppers verbunden.

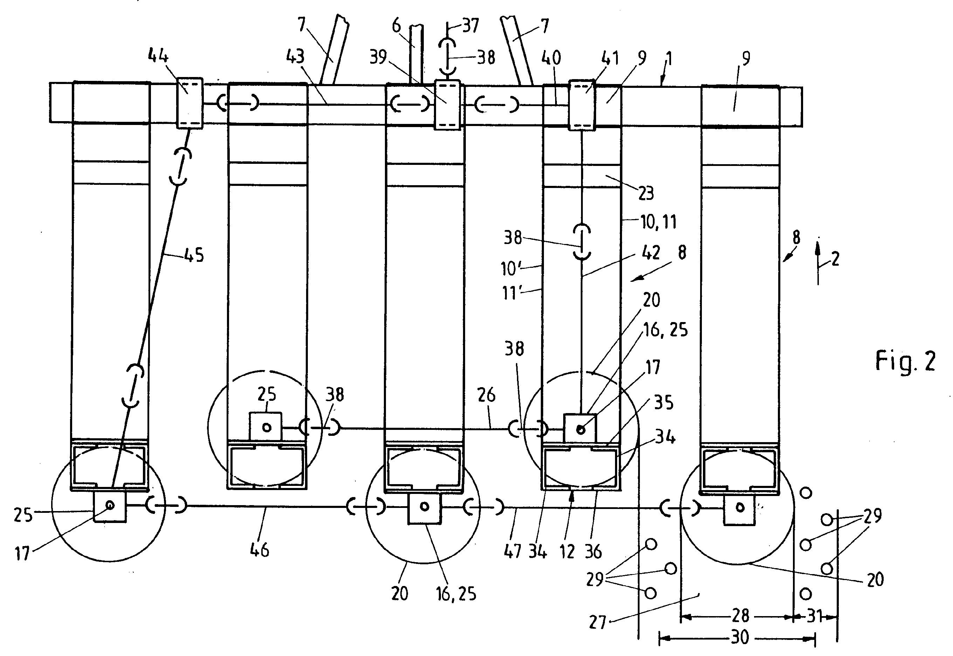

An dem Maschinenrahmen 1 sitzt ein Parallelogrammlenker 8, der ein vorderes, dem Maschinenrahmen 1 zugekehrtes Koppelglied 9, zwei Lenkstangen 10 und 11 sowie ein hinteres Koppelglied 12 aufweist. Die Teile 9, 10, 11, 12 des Parallelogrammlenkers 8 stehen über Gelenkpunkte miteinander in Verbindung, die nach Art eines Parallelogramms angeordnet sind, so daß die beiden parallel angeordneten Lenkstangen 10 und 11 die gleiche wirksame Länge aufweisen. Ebenso ist die wirksame Länge der Koppelglieder 9 und 12 übereinstimmend, so daß bei einer Bewegung des Parallelogrammlenkers 8 um den Maschinenrahmen 1 die beiden Koppelglieder 9 und 12 immer parallel zueinander geführt werden. Die Lenkstangen 10 und 11 können paarweise doppelt im Bereich jedes Parallelogrammlenkers 8 vorgesehen sein, wie dies aus Figur 2 hervorgeht. Hierdurch entsteht in Verbindung mit den Koppelgliedern 9 und 12 ein stabiles, räumliches Gebilde. Der Verschwenkwinkel des Parallelogrammlenkers 8 um den Maschinenrahmen 1 wird durch eine Anschlaglasche 13 mit Langloch 14 begrenzt, in welches ein Bolzen 15 an der unteren Lenkstange 11 eingreift. Die Anschlaglasche 13 kann um den gleichen Gelenkpunkt an dem Koppelglied 9 schwenkbar angelenkt sein, wie auch die obere Lenkstange 10.

Am hinteren Koppelglied 12 ist ein Lager 16 für die drehbare Lagerung einer sich im wesentlichen etwa senkrecht erstreckenden Welle 17 vorgesehen. Am unteren Ende der Welle 17 ist ein Werkzeugträger 18 vorgesehen, der mit Hilfe einer Verschraubung 19 zur lösbaren und damit auswechselbaren Aufnahme eines Hackwerkzeugs 20 ausgebildet ist. Das Hackwerkzeug 20 besitzt nach unten, also in Richtung auf den Boden 5, offene Topfform und kann vorzugsweise, wie dargestellt, aus einem kegelmantelförmigen Borstenkörper bestehen. Das Hackwerkzeug 20 kann auch mehrteilig ausgebildet sein und aus mehreren, ineinandergeschachtelten derartigen Borstenkörpern bestehen. Auch löffelartige und stabartige oder schneidende Werkzeug sind an dieser Stelle möglich. Wichtig ist, daß im wesentlichen die nach unten offene Topfform eingehalten wird. Hierdurch wird ein Innenraum 21 gebildet, in dem ein Abstützkörper 22 untergebracht ist, der zugleich als Kontermutter für die Verschraubung 19 ausgebildet sein kann. Der Abstützkörper 22 kann Halbkugelform aufweisen und wird mit der Welle 17 drehend angetrieben, so daß er sich auf dem Boden 5 abstützt und damit die Arbeitshöhe bzw. Eindringtiefe des Hackwerkzeugs 20 in den Boden 5 festlegt.

Sofern die beiden Lenkstangen 10 und 11 paarweise im Abstand voneinander vorgesehen sind, können diese jeweils durch Versteifungsrohre 23 und 24 ausgesteift sein, während sich ansonsten die Koppelglieder 9 und 12 quer über den Abstand der beiden Lenkstangen 10 und 11 erstrecken.

Das Lager 16 kann zugleich als Winkelgetriebe 25 ausgebildet sein, in welches der Drehantrieb über eine Zwischenwelle 26 übertragen wird, die sich etwa parallel zu dem Maschinenrahmen 1 über einen Teil der Arbeitsbreite erstreckt und nur zur Sichtbarmachung in Figur 1 angedeutet ist.

Obwohl in Figur 1 zur Klarstellung nur die Seitenansicht einer einzigen Arbeiteinheit mit Parallelogramm- lenker 8, etwa vertikaler Welle 17 und Hackwerkzeug 20 gezeigt und beschrieben ist, versteht es sich, daß eine Mehrzahl solcher Einheiten nebeneinander an dem Maschinenrahmen 1 vorgesehen sind, wie dies anhand von Figur 2 erkennbar ist. Dabei bearbeiten die Hackwerkzeuge 20 einen Streifen 27 entsprechend dem wirksamen Durchmesser des Hackwerkzeugs 20, der eine gewünschte Breite 28 aufweist, welche an den Reihenabstand angepaßt ist. Es sind hier Maispflanzen 29 in diagonaler Reihenaussaat angedeutet, die von Reihe zu Reihe, jeweils gemittelt, einen Reihenabstand 30 aufweisen, während die Reihenbreite 31 einen Streifen des Bodens 5 verkörpert, der nicht bearbeitet werden soll. Sofern die Reihen, nicht wie hier in Doppelreihe, sondern in Einzelreihe gesät werden bzw. gepflanzt sind, gilt entsprechendes. Hieraus wird auch verständlich, daß die einzelnen Arbeitsaggregate, jeweils im wesentlichen aus einem Parallelogrammlenker 8 und einem Hackwerkzeug 20 bestehend, auf den Reihenabstand 30 und die Reihenbreite 31 einstellbar sein müssen. Dies geschieht einerseits durch eine querverschiebliche Anordnung der Koppelglieder 9 der einzelnen Aggregate an dem Maschinenrahmen 1. Hier kann jedes Koppelglied 9 mit einem Schuh 32 versehen sein, zu der eine Befestigungsschraube 33 gehört. Nach dem Lösen der Befestigungsschraube 33 kann insoweit das Koppelglied 9 mit dem Schuh 32 quer am Maschinenrahmen 1 verschoben werden und dann nach entsprechender Einstellung mit Hilfe der Befestigungsschraube 33 fixiert werden. Anstelle dieser Querverschieblichkeit oder auch zusätzlich zu dieser kann auch das Lager 16 mit dem Winkelgetriebe 25 an dem hinteren Koppelglied 12 querverschieblich angeordnet sein. Hiermit wird die Einstellung auf den Reihenabstand 30 möglich. Die Einstellung auf die Reihenbreite 31 ergibt sich durch Verwendung von Hackwerkzeugen 20 entsprechenden Durchmessers oder durch Anordnung mehrerer Hackwerkzeuge 20 in Richtung gemäß Pfeil 2 sowie quer dazu versetzt zueinander, wobei dann mindestens zwei Hackwerkzeuge zwischen je zwei Reihen von Pflanzen 29 arbeiten.

Die verschiedenen Arbeitseinheiten jeweils aus Parallelogrammlenker 8, vertikaler Welle 17 und Hackwerkzeug 20 können am Maschinenrahmen 1 nebeneinander quer zur Arbeitsrichtung angeordnet sein, wie dies Figur 1 wiedergibt. Es ist aber auch möglich, wie dies Figur 2 zeigt, gleichsam zwei Zeilen zu bilden, in denen die Hackwerkzeuge 20 angeordnet sind. In Figur 2 weist jede Arbeitseinheit einen Parallelogrammlenker 8 auf, die abwechselnd identisch ausgebildet sind. Jeder Parallelogrammlenker 8 weist ein vorderes Koppelglied 9 auf, an dem paarweise ein erstes Lenkstangenpaar 10, 11 und ein zweites Lenkstangenpaar 10', 11' angeordnet sind. Sämtliche Lenkstangen 10, 11, 10', 11' können identisch ausgebildet sein. Die hinteren Enden dieser vier Lenkstangen werden über das Koppelglied 12 zusammengefaßt, welches, wie hier erkennbar, aus zwei U-förmigen Schienenabschnitten 34 und zwei Platten 35 und 36 besteht. Auch diese Platten 35 und 36 können an sich identisch ausgebildet sein. Man erkennt, daß abwechselnd über die Arbeitsbreite das Lager 16 für die vertikale Welle 17 bzw. das Winkelgetriebe 25 jeweils einmal an der vorderen Platte 35 und dann an der hinteren Platte 36 usw. befestigt ist. Auf diese Art und Weise ergibt sich der Zeilenabstand der Hackwerkzeuge 20 in Arbeitsrichtung gemäß Pfeil 2.

Für die Realisierung des Antriebs der vertikalen Wellen 17 und damit der jeweiligen Hackwerkzeuge 20 gibt es verschiedene Möglichkeiten. Es ist beispielsweise möglich, auf jedes Lager 16 einen Ölmotor aufzusetzen und diese Ölmotoren dann über entsprechende Leitungsverbindungen von einer zentralen Pumpe aus anzutreiben. Figur 2 zeigt einen mechanischen Antrieb über eine Zapfwelle 37 des Schleppers. Das Drehmoment wird über ein Kardangelenk 38 einem Verteilergetriebe 39 zugeführt, in welchem nach rechts und links die zeilenweise Verzweigung des Antriebs erfolgt. Die in Arbeitsrichtung vordere Zeile aus den beiden Hackwerkzeugen 20 wird über eine Zwischenwelle 40, die aus mehreren teleskopisch verschiebbaren Teilen und zugehörigen Kardangelenken bestehen kann, einem Winkelgetriebe 41 zugeführt, welches zweckmäßig an dem vorderen Koppelglied 9 der betreffenden Einheit vorgesehen ist. Ausgangsseitig ist wiederum eine Zwischenwelle 42 mit entsprechenden Kardangelenken 38 vorgesehen, über die der Antrieb dem Winkelgetriebe 25 zugeführt wird. Damit ist das Hackwerkzeug 20 dieser Einheit angetrieben. Das Winkelgetriebe 25 weist hier einen zweiten Ausgang auf, an welchem eine Zwischenwelle 26, die ebenfalls mit Kardangelenken 38 versehen ist, zu dem in Figur 2 links davon in der gleichen Zeile befindlichen Hackwerkzeug 20 führt. Dort ist dann wiederum ein Winkelgetriebe 25 vorgesehen, welches aber nur einen Ausgang hat und somit die dortige Welle 17 antreibt.

Die zweite Zeile von Hackwerkzeugen 20 weist drei Einheiten auf. Der Antrieb erfolgt über das Verteilergetriebe 39 nach links, und zwar mit Hilfe einer Zwischenwelle 43 eines Winkelgetriebes 44, weiter über eine Zwischenwelle 45 in ein Winkelgetriebe 25, welches an einer hinteren Platte 36 befestigt ist. Von dort führt dann wieder eine Zwischenwelle 46 in das Winkelgetriebe 25 der mittleren Einheit und weiter über eine Zwischenwelle 47 in das Winkelgetriebe 25 der am weitesten rechts dargestellten Einheit. Es versteht sich, daß auch hier die Zwischenwellen aus teleskopisch ineinander verschiebbaren Teilen bestehen und entsprechende Kardangelenke 38 vorgesehen sind, damit die Einheiten aus Parallelogrammlenker 8, vertikaler Welle 7 und

6

Hackwerkzeug 20 sich jeweils individuell bewegen können, obwohl sie gemeinsam angetrieben werden. Die teleskopische Verschiebbarkeit der Zwischenwelle ist auch für eine andere Abstandseinstellung der Einheiten zueinander, also auf einen anderen Reihenabstand 30, erforderlich.

Es ist erkennbar, daß die Wellen 17 im wesentlichen vertikal angeordnet sind. Die genaue Stellung hängt jedoch davon ab, wie die Träger 6 und 7 zueinander durch die Dreipunkt-Hebevorrichtung des Schleppers eingestellt werden. Damit ist es durchaus möglich, auch eine leichte Schräglage der Wellen 17 gegenüber der Vertikalrichtung zu wählen, etwa dergestalt, daß die Hackwerkzeuge 20 beim Umlauf vorn etwas tiefer in den Boden 5 eingreifen als hinten oder umgekehrt. Da die Hackwerkzeuge 20 auswechselbar angeordnet sind, lassen sich verschiedene Hackwerkzeuge, auch verschiebene Kombinationen von Hackwerkzeugen, an jeder Welle 17 anwenden, die je nach dem gewünschten Arbeitsergebnis geformt sind. Durch die topfartige Form wird auf jeden Fall erreicht, daß man sehr nahe an die Pflanzen heranarbeiten kann und ausgebildete Blätter an den Pflanzen in dem darüber befindlichen Bereich nicht beschädigt werden. Natürlich kann auch die Drehrichtung und die Drehgeschwindigkeit an das jeweils gewünschte Arbeitsergebnis angepaßt werden. Bei Verwendung relativ weicher, federnder Borsten an den Hackwerkzeugen 20 und vergleichsweise hoher Drehgeschwindigkeit wird eine rasierende Wirkung erreicht, d. h. die Unkräuter werden unmittelbar am Boden abgemäht, ohne daß eine eigentliche Bodenbearbeitung stattfindet. Will man in den Boden eindringen, dann empfiehlt sich zumindest die Mitverwendung etwas steiferer, zinkenartiger Bestandteile an den Hackwerkzeugen 20.

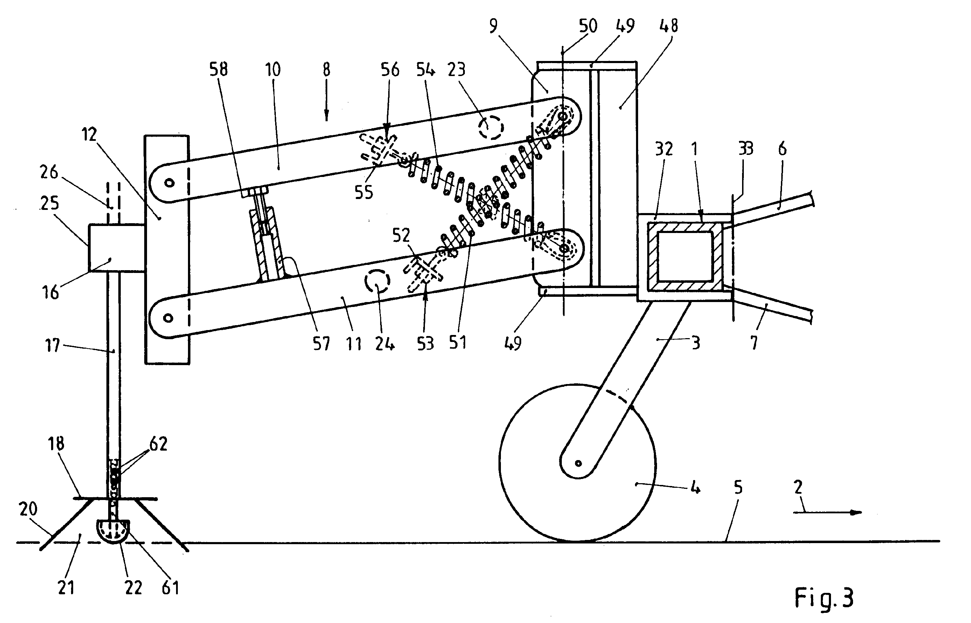

Figur 3 zeigt eine ähnliche Darstellung wie Figur 1, wobei jedoch einzelne Teile der Bodenbearbeitungsmaschine anders ausgebildet sind. An dem Maschinenrahmen 1 sitzt hier eine Säule 48 mit zwei Auslegern 49, die zwischen sich das Koppelglied 9 aufnehmen. Die Ausleger 49 bilden eine Lagerung für das Koppelglied 9, welches hier um eine vertikale Achse 50 schwenkbar ist. Damit ist der gesamte Parallelogrammlenker 8 und letztlich auch das von ihm getragene Hackwerkzeug 20 um die Achse 50 schwenkbar, so daß es quer zur Arbeitsrichtung gemäß Pfeil 2 ausweichen kann. Diese schwenkbare Lagerung kann noch in ihrer Schwenkrichtung durch eine nicht dargestellte Feder vorgespannt sein, so daß über die Anpreßkraft die Anstellung und das Arbeiten der Hackwerkzeuge sowie das Ausweichen vor entsprechenden Kulturpflanzen, z. B. Weinstöcken, gesteuert wird.

Figur 3 verdeutlicht auch die Anordnung einer Feder 51, die am Maschinenrahmen 1 oder am Koppelglied 9 beispielsweise in dem Schwenklager der oberen Lenkstange 10 eingehängt ist und deren anderes Ende an einem Winkel 52 zwischen den beiden Lenkstangen 11 angreift. Diese Feder 51 wirkt als Entlastungsfeder und gestattet es, den Anpreßdruck und die Arbeitstiefe des Hackwerkzeugs 20 feinfühlig einzustellen. Eine Einstelleinrichtung 53 weist eine Gewindestange auf, die durch eine Durchbrechung des Winkels 52 hindurchgeführt ist und in deren Auge das Ende der Feder 51 eingehängt ist. Der Gewindestange ist eine Mutter zugeordnet, so daß hier die Vorspannkraft der Feder 51 feinfühlig einstellbar ist. Es versteht sich, daß statt einer Feder 51 auch mehrere solcher Feder in Parallelanordnung vorgesehen sein könnten. Das andere Federauflager bzw. die entsprechende Abstützstelle muß nicht unbedingt im Gelenkpunkt der Gelenkstange 10 an dem Koppelglied 9 vorgesehen sein. Es genügt, wenn dies in der Nähe dieses Gelenks der Fall ist oder wenn die Wirklinie der Feder 51 sich im Sinne einer Entlastung des Hackwerkzeugs 20 am Maschinenrahmen 1 abstützt.

Statt der Feder 51 kann andererseits eine Feder 54 vorgesehen sein, die einerseits am Gelenkpunkt der unteren Lenkstange 11 angreift und andererseits sich an einem Winkel 55 abstützt, der die beiden oberen Lenkstangen 10 verbindet und der zugleich auch die Funktion des Versteifungsrohres 23 ersetzen kann. Auch hier ist eine Einstelleinrichtung 56 vorgesehen, die entsprechend wie die Einstelleinrichtung 53 ausgebildet ist. Auch damit kann die Feder 54 feinfühlig gespannt werden, hier jedoch im Sinne einer Belastung des Hackwerkzeugs 20. Die Federn 51 und 54 müssen nicht unbedingt als getrennte, separate Federn vorgesehen sein. Es genügt, eine einzige Feder oder die gleichen Federn zu benutzen, die je nach Anwendungsfall in den beiden aufgezeigten Möglichkeiten wahlweise einhängbar sind und angeordnet werden. Es versteht sich, daß die Anordnung der Federn 51 bzw. 54 unabhängig davon ist, ob das Koppelglied 9 starr am Maschinenrahmen 1 angeordnet ist oder um die Achse 50 schwenkbar.

Statt der Anschlaglasche 13 ist hier zur Begrenzung der Verschwenkbarkeit an der unteren Lenkstange 11 ein Gewinderohr 57 angeschweißt, in welches eine Stellschraube 58 eingreift, so daß hier die Schwenkbeweglichkeit nach unten einstellbar begrenzt ist.

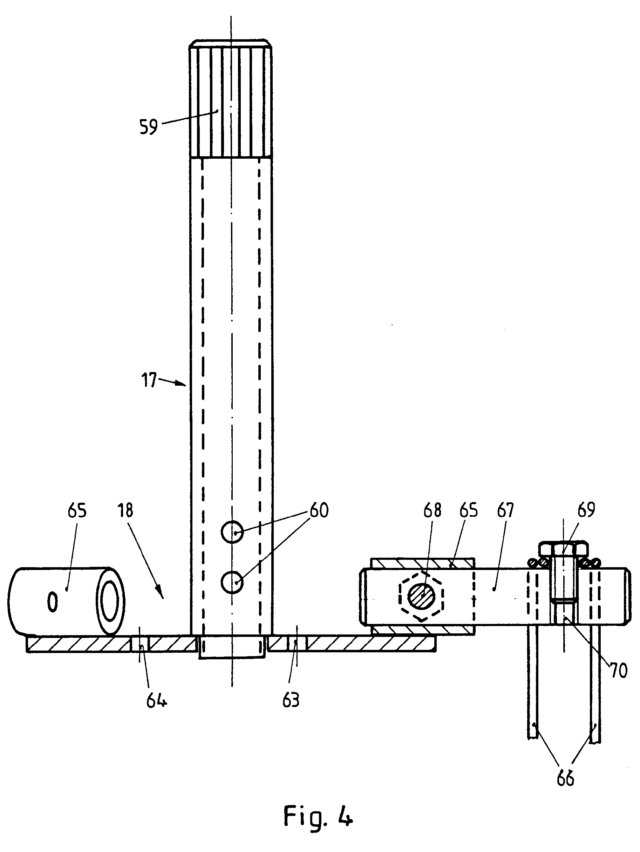

Figur 3 läßt auch erkennen, daß es für die Ausbildung und Anordnung der Hackwerkzeuge verschiedene Möglichkeiten gibt. Wie auch Figur 4 in vergrößernder Darstellung zu erkennen gibt, ist der Werkzeugträger 18 hier in Form einer flachen Platten am unteren Ende der Welle 17 angeschweißt. Die Welle 17 ist ein Hohlrohr und besitzt an ihrem oberen Ende nutenförmige Vertiefungen 59 zur Übertragung des Drehantriebs. Im unteren Endbereich sind zwei Querlöcher 60 in einem Abstand vorgesehen, die Bestandteil der höhenveränderbaren Einstellung des Abstützkörpers 22 sind. Der Abstützkörper 22 ist hier in Form einer halbkugeligen Schale vorgesehen, die mit einem Rohrabschnitt 61 versehen ist, der teleskopartig in der hohlen Welle 17 verschiebbar ist. Der Rohrabschnitt 61 weist im Abstand übereinander angeordnete Querbohrungen 62 auf, so daß durch eines der Querlöcher 60 und eine der Querbohrungen 62 ein nicht dargestellter Absteckstift gesteckt werden kann, um die Einstellungshöhe zu gewährleisten. Der Abstand der beiden benachbarten Querlöcher 60 beträgt vorzugsweise das 1 1/2fache des Abstands benachbarter Querbohrungen 62, so daß auf diese Weise die Höhe in sehr kleinen Schritten verstellt und angepaßt werden kann.

Die Scheibe des Werkzeugträgers 18 besitzt auf zwei unterschiedlichen Durchmessern je drei Löcher 63, 64, über die unterschiedliche Borstenkörper bzw. Hackwerkzeuge 20 befestigbar sind. Auf der Oberseite der Scheibe sind drei Rohrabschnitte 65 jeweils um 120° gegeneinander versetzt angeordnet, durch die im Fall der Anordnung von Doppelzinken 66 Bolzen 67 gesteckt und mit einer Befestigungsschraube mit Mutter 68 fixiert werden. Die Bolzen 67 ragen etwas nach außen aus und dienen der Befestigung von Doppelzinken 66 oder Einfachzinken, die mit Schrauben 69 fixiert und eingestellt werden. Über die Schrauben 69 sind die Zinken 66 leicht austauschbar angeordnet, so daß sie als Verschleißteile einfach zu ersetzen sind. Wenn ohne Zinken 66 gearbeitet wird, werden auch die Bolzen 67 aus den Rohrabschnitten 65 herausgenommen, damit in diesem Bereich wachsende Pflanzen nicht beeinträchtigt werden. Die Schrauben 69 greifen in Gewindelöcher 70 ein, von denen auch mehrere über die Länge des Bolzen 67 verteilt angeordnet sein können, um insoweit den Radius, mit welchem die Zinken 66 umlaufen, wählen zu können und beispielsweise auf den Durchmesser eines Borstenkörpers einzustellen.

**Bezugszeichenliste:**

| | | | | | |
|---|---|---|---|---|---|
| 1 | = | Maschinenrahmen | 33 | = | Befestigungsschraube |
| 2 | = | Pfeil | 34 | = | Schienenabschnitt |
| 3 | = | Ausleger | 35 | = | Platte |
| 4 | = | Tragrad | 36 | = | Platte |
| 5 | = | Boden | 37 | = | Zapfwelle |
| 6 | = | Träger | 38 | = | Kardangelenk |
| 7 | = | Träger | 39 | = | Verteilergetriebe |
| 8 | = | Parallelogrammlenker | 40 | = | Zwischenwelle |
| 9 | = | Koppelglied | 41 | = | Winkelgetriebe |
| 10 | = | Lenkstange | 42 | = | Zwischenwelle |
| 11 | = | Lenkstange | 43 | = | Zwischenwelle |
| 12 | = | Koppelglied | 44 | = | Winkelgetriebe |
| 13 | = | Anschlaglasche | 45 | = | Zwischenwelle |
| 14 | = | Langloch | 46 | = | Zwischenwelle |
| 15 | = | Bolzen | 47 | = | Zwischenwelle |
| 16 | = | Lager | 48 | = | Säule |
| 17 | = | Welle | 49 | = | Ausleger |
| 18 | = | Werkzeugträger | 50 | = | Achse |
| 19 | = | Verschraubung | 51 | = | Feder |
| 20 | = | Hackwerkzeug | 52 | = | Winkel |
| 21 | = | Innenraum | 53 | = | Einstelleinrichtung |
| 22 | = | Abstützkörper | 54 | = | Feder |
| 23 | = | Versteifungsrohr | 55 | = | Winkel |
| 24 | = | Versteifungsrohr | 56 | = | Einstelleinrichtung |
| 25 | = | Winkelgetriebe | 57 | = | Gewinderohr |
| 26 | = | Zwischenwelle | 58 | = | Stellschraube |
| 27 | = | Streifen | 59 | = | Vertiefung |
| 28 | = | Breite | 60 | = | Querloch |
| 29 | = | Maispflanze | 61 | = | Rohrabschnitt |
| 30 | = | Reihenabstand | 62 | = | Querbohrung |
| 31 | = | Reihenbreite | 63 | = | Loch |
| 32 | = | Schuh | 64 | = | Loch |

```
65 = Rohrabschnitt
66 = Doppelzinken
67 = Bolzen
68 = Befestigungsschraube
69 = Schraube
70 = Gewindeloch
```

**Patentansprüche**

1. Bodenbearbeitungsmaschine für Reihenkulturen, wie Rüben, Mais, Kartoffeln usw., mit einem an die Dreipunkt-Hebevorrichtung eines Schleppers anschließbaren Maschinenrahmen (1), an dem eine Mehrzahl von Hackwerkzeugen (20) angeordnet ist, die lösbar an Werkzeugträgern (18) befestigt sind, die über vertikal angeordnete Wellen (17) rotierend angetrieben sind, wobei ein gemeinsamer Antrieb und ein zu den vertikalen Wellen (17) führendes Verteilergetriebe (39) vorgesehen ist und jedes mit je einer vertikalen Welle (17) rotierend angetriebene Hackwerkzeug (20) auf einem Parallelogrammlenker (8) angeordnet ist, dadurch gekennzeichnet, daß jedes Hackwerkzeug (20) einen oder mehrere an dem Werkzeugträger (18) zu befestigende Bürstenkörper mit Borsten aus federnd nachgiebigem Material aufweist und in nach unten offener Topfform angeordnet ist, und daß in dem durch die Topfform gebildeten Innenraum (21) jedes Hackwerkzeugs (20) ein über die Oberfläche des Bodens (5) geführter Abstützkörper (22) an dem Werkzeugträger (18) im Zentrum des Hackwerkzeugs (20) lösbar befestigt ist, der gegenüber dem Hackwerkzeug (20) höhenverstellbar angeordnet ist.

2. Bodenbearbeitungsmaschine nach Anspruch 1, dadurch gekennzeichnet, daß am Parallelogrammlenker (8) ein oder mehrere Federn (51, 54) und eine Einstelleinrichtung (53, 56) zum feinfühligen Einstellen einer Be- oder Entlastung des rotierend angetriebenen Hackwerkzeugs (20) vorgesehen sind.

3. Bodenbearbeitungsmaschine nach Anspruch 1 und 2, dadurch gekennzeichnet, daß die Feder oder die Federn (51, 54) einerseits an den Lenkstangen (11 oder 11) des Parallelogrammlenkers (8) und andererseits am Maschinenrahmen (1) angreifend angeordnet sind.

4. Bodenbearbeitungsmaschine nach einem der Ansprüche 1 bis 3, dadurch gekennzeichnet, daß der Parallelogrammlenker (8) um eine vertikale Achse (50) schwenkbar angeordnet ist.

5. Bodenbearbeitungsmaschine nach Anspruch 1, dadurch gekennzeichnet, daß der Abstützkörper (22) als Halbkugel ausgebildet ist.

6. Bodenbearbeitungsmaschine nach Anspruch 1, dadurch gekennzeichnet, daß der Bürstenkörper mit Borsten unterschiedlicher Länge und/oder aus unterschiedlichen Materialien besetzt ist.

7. Bodenbearbeitungsmaschine nach Anspruch 1 oder 6, dadurch gekennzeichnet, daß das Hackwerkzeug (20) zusätzlich zu mindestens einem Bürstenkörper Stahldrähte oder Zinken aufweist.

8. Bodenbearbeitungsmaschine nach Anspruch 1, dadurch gekennzeichnet, daß jeder Parallelogrammlenker (8) mindestens zwei parallele Lenkstangen (10, 11) und zwei Koppelglieder (9, 12) aufweist, wobei das eine Koppelglied (9) am Maschinenrahmen (1) gelagert ist und das andere Koppelglied (12) ein Lager (16) für die vertikale Welle (17) eines Werkzeugträgers (18) trägt.

9. Bodenbearbeitungsmaschine nach Anspruch 8, dadurch gekennzeichnet, daß für jeden Parallelogrammlenker (8) je zwei Lenkstangenpaare (10, 11; 10', 11') mit je zwei übereinander angeordneten Lenkstangen (10, 11 und 10', 11') vorgesehen sind, die durch die gemeinsamen Koppelglieder (9, 12) miteinander verbunden sind.

10. Bodenbearbeitungsmaschine nach Anspruch 5 oder 6, dadurch gekennzeichnet, daß zur Bearbeitung des Abstands zwischen zwei benachbarten Reihen von Pflanzen zwei rotierend angetriebene Hackwerkzeuge (20) vorgesehen sind, die in Arbeitsrichtung sowie quer dazu versetzt zueinander angeordnet sind und deren Arbeitsspuren einander überlappen.

## Claims

1. Ground-working machine for plantations in rows, such as beet, maize, potatoes, etc., with a machine frame (1) which can be connected to the three-point lifting device of a tractor and on which is arranged a plurality of hoeing implements (20) fastened releasably to implement carriers (18) which are driven in rotation via vertically arranged shafts (17), there being provided a common drive and a power take-off gear (39) leading to the vertical shafts (17), and each hoeing implement (20) driven in rotation by means of a respective vertical shaft (17) being arranged on a parallelogram link (8), characterised in that each hoeing implement (20) has one or more brush bodies to be fastened to the implement carrier (18) and having bristles made of resiliently flexible material and is arranged in the shape of a pot open downwards, and in that, in the interior (21), formed by the pot shape, of each hoeing implement (20), a supporting body (22) guided over the surface of the ground (5) is fastened releasably to the implement carrier (18) in the centre of the hoeing implement (20) and is arranged so as to be vertically adjustable relative to the hoeing implement (20).

2. Ground-working machine according to Claim 1, characterised in that one or more springs (51, 54) and a setting device (53, 56) for the sensitive setting of a loading or relieving of the hoeing implement (20) driven in rotation are provided on the parallelogram link (8).

3. Ground-working machine according to Claims 1 and 2, characterised in that the spring or springs (51, 54) are arranged so as to engage, on the one hand, of the steering rods (10 or 11) of the parallelogram link (8) and, on the other hand, on the machine frame (1).

4. Ground-working machine according to one of Claims 1 to 3, characterised in that the parallelogram link (8) is arranged pivotably about a vertical axis (50).

5. Ground-working machine according to Claim 1, characterised in that the supporting body (22) is designed as a hemisphere.

6. Ground-working machine according to Claim 1, characterised in that the brush body is equipped with bristles of differing length and/or made of different materials.

7. Ground-working machine according to Claim 1 or 6, characterised in that the hoeing implement (20) has steel wires or tines in addition to at least one brush body.

8. Ground-working machine according to Claim 1, characterised in that each parallelogram link (8) has at least two parallel steering rods (10, 11) and two coupling members (9, 12), one coupling member (9) being mounted on the machine frame (1) and the other coupling member (12) carrying a bearing (16) for the vertical shaft (17) of an implement carrier (18).

9. Ground-working machine according to Claim 8, characterised in that for each parallelogram link (8) there are two pairs of steering rods (10, 11, 10', 11'), each pair comprising two steering rods (10, 11 and 10', 11') arranged one above the other and connected to one another by means of the common coupling members (9, 12).

10. Ground-working machine according to Claim 5 or 6, characterised in that, for working the spacing between two mutually adjacent rows of plants, there are two hoeing implements (20) given in rotation which are arranged offset relative to one another in the working direction and transversely to this and the working tracks of which overtap one another.

## Revendications

1. Machine pour cultiver le sol pour des cultures en ligne, telles que betteraves, maïs, pommes de terre, etc.. avec un châssis de machine (1) raccordable au dispositif de levage à trois points d'un tracteur, sur lequel châssis est disposée une pluralité d'outils sarcleurs (20) qui sont fixés de manière amovible à des supports d'outils (18) qui sont entraînés en rotation par des arbres (17) disposés verticalement, en prévoyant un entraînement commun et un mécanisme répartiteur (39) allant aux arbres verticaux (17), chaque outil sarcleur (20) entraîné en rotation individuellement par un arbre vertical (17) étant disposé sur un guidage à parallélogramme (8),

**caractérisée** en ce que chaque outil sarcleur (20) présente un ou plusieurs corps de brosses avec des poils en matière flexible élastiquement, destinés à être fixés au porte-outil (18), et est agencé sous la forme d'un pot ouvert vers le bas, et en ce que dans l'espace intérieur (21) constitué par la forme en pot de chaque outil sarcleur (20) un corps d'appui (22) guidé sur la surface du sol (5) est fixé de manière amovible au porte-outil (18) au centre de l'outil sarcleur (20) en étant réglable en hauteur par rapport à l'outil sarcleur (20).

2. Machine pour cultiver le sol selon la revendication 1, caractérisée en ce que sont prévus sur le guidage à parallélogramme (8) un ou plusieurs ressorts (51, 54) et un dispositif de réglage (53, 56) pour le réglage fin de la mise en charge ou de la relaxation de l'outil sarcleur (20) entraîné en rotation.

3. Machine pour cultiver le sol selon les revendications 1 et 2, caractérisée en ce que le ressort ou les ressorts (51, 54) sont disposés en prise d'une part sur les barres de guidage (10 ou 11) du guidage à parallélogramme et d'autre part sur le châssis (1) de la machine.

4. Machine pour cultiver le sol selon une des revendications 1 à 3, caractérisée en ce que le guidage à parallélogramme (8) est monté pivotant autour d'un axe vertical (50).

5. Machine pour cultiver le sol selon la revendication 1, caractérisée en ce que le corps d'appui (22) a la forme d'une hémisphère.

6. Machine pour cultiver le sol selon la revendication 1, caractérisée en ce que le corps de brosse est garni de poils de longueurs différentes et/ou constitués de matières différentes.

7. Machine pour cultiver le sol selon la revendication 1 ou 6, caractérisée en ce que l'outil sarcleur (20) présente en supplément à au moins un corps de brosse des fils d'acier ou des dents.

8. Machine pour cultiver le sol selon la revendication 1, caractérisée en ce que chaque guidage à parallélogramme (8) présente au moins deux barres de guidage (10, 11) parallèles et deux bras de liaison (9, 12), un des bras de liaison (9) étant articulé sur le châssis (1) de la machine et l'autre bras de liaison (12) portant un palier (16) pour l'arbre vertical (17) d'un porte-outil (18).

9. Machine pour cultiver le sol selon la revendication 8, caractérisée en ce qu'il est prévu pour chaque guidage à parallélogramme (8) deux paires de barres de guidage (10, 11; 10', 11') avec chaque fois deux barres de guidage (10, 11 et 10', 11') disposées l'une au-dessus de l'autre, qui sont reliées l'une à l'autre par le bras de liaison commun (9, 12).

10. Machine pour cultiver le sol selon la revendication 5 ou 6, caractérisée en ce que, pour cultiver l'intervalle entre deux rangées voisines de plantes, sont prévus deux outils sarcleurs (20) entraînés en rotation, qui sont décalés l'un par rapport à l'autre dans le sens du travail ainsi que dans le sens transversale, et dont les pistes de travail se chevauchent mutuellement.

Fig.1

Fig. 2

Fig.3

Fig. 4